# EUROPÄISCHE PATENTSCHRIFT

(11) **EP 3 483 096 B1**
(45) Veröffentlichungstag und Bekanntmachung des Hinweises auf die Patenterteilung: **31.08.2022**
(21) Anmeldenummer: 18201914.1
(22) Anmeldetag: 23.10.2018
(51) Int. Cl.: B65G 39/02

(54) **KUGELFÖRDERTISCHSYSTEM**
BALL FEED TABLE SYSTEM
SYSTÈME DE TABLE DE TRANSPORT DE BALLES

(30) Priorität: 07.11.2017 DE 102017125981
(43) Veröffentlichungstag der Anmeldung: 15.05.2019
(73) Patentinhaber: MOSER, Josef, 5524 Annaberg (AT)
(72) Erfinder: MOSER, Josef, 5524 Annaberg (AT)
(74) Vertreter: Riebling, Peter

(56) Entgegenhaltungen:
- EP-A1- 0 611 012
- WO-A1-2014/066838
- WO-A1-2017/134278
- US-A- 3 828 917
- US-A1- 2001 052 447
- US-A1- 2005 040 009
- US-A1- 2015 375 939

## Beschreibung

Die Erfindung betrifft ein Kugelfördertischsystem zum Fördern und Positionieren von Artikeln.

Kugeitische erleichtern das Verschieben von Stückgütern auf einer waagrechten Ebene. Kugeltische bestehen bevorzugt aus einer Stahlplatte, wobei in der Platte sich Bohrungen zur Aufnahme der Kugelrollen befinden. Die Teilung und Ausführung der Kugelrollen richtet sich nach den zu befördernden Gütern. Mit Hilfe eines Kugeltisches können beispielsweise Fördergüter mit einem geschlossenen, festen und ebenen Bodenflächen von Hand mit geringem Kraftaufwand horizontal in jede Richtung bewegt werden. Solche Kugeltische sind Bausteine in Fördersystemen, Zuführungen, an Bearbeitungs- und Verpackungseinrichtungen.

Unter einem Kugeifördertischsystem versteht die vorliegende Anmeldung einen Kugeltisch mit angetriebenen Kugeln, wodurch ein Stückgut bzw. ein Artikel leicht verschoben werden kann.

Mit der DE102009026388A1 werden ein Flächenantrieb, ein Verfahren und eine Vorrichtung zum Transport, zur Sortierung, Verschiebung und/oder Verteilung von Artikeln auf einer Auflage offenbart. Der Flächenantrieb weist eine zumindest abschnittweise ebene Auflage mit einer Vielzahl von darin in regelmäßiger Anordnung gelagerten Kugeln, die zum Bewegen von auf der Auflage befindlichen Artikeln antreibbar sind. Die Kugeln werden mit Hilfe von Elektromotoren bewegt, wobei der Elektromotor über eine rotierende Welle eine Reibradübertragung antreibt, weiche dann die Kugel bewegt.

Die EP276881B1 offenbart ein Fördersystem mit angetriebenen Kugeln, wobei jede angetriebene Kugel von mindestens einer Antriebswalze angetrieben wird und die angetriebene Kugel durch mindestens eine Antriebswalze getragen wird, deren Kontaktpunkt mit der angetriebenen Kugel in oder in einer Entfernung unter der horizontalen Ebene durch das Zentrum der angetriebenen Kugel angeordnet ist.

Mit der WO 2017/134278 A1 wird ein Kugelfördertischsystem mit einer Kugelplatte mit einer zumindest abschnittsweisen ebenen Auflage offenbart, wobei in der Kugelplatte Ausnehmungen vorhanden sind, durch welche die Kugeln zumindest teilweise hindurchgreifen. Die Kugeln sind reibschlüssig mit mehreren Antriebsrollen verbunden, welche von einem Antriebsmotor angetrieben werden und dadurch ein auf der Auflage befindlicher Artikel bewegt wird.

Die US 3 828 917 A offenbart ein Kugelfördertischsystem gemäß dem Oberbegriff des Anspruchs 1.

Die Förder- und Positionier-Kugeltischanordnungen aus dem Stand der Technik sind jedoch aufwendig und komplex ausgebildet und erfüllen die hohen Dynamikanforderungen hinsichtlich der Förderung und Positionierung von Artikeln nicht ausreichend. Dies tritt insbesondere bei der Förderung von Leiterplatten, Halbleitersubstraten, Displayelementen, Photovoltaikelementen oder Keramik- oder Glaselementen auf. Darüber hinaus sind die Systeme aus dem Stand der Technik insgesamt zu teuer und sehr aufwändig in der Wartung. Oftmals erfüllen diese Systeme auch nicht die Anforderungen an Reinräume und Antistatik. Aufgabe der vorliegenden Erfindung ist es nun, ein Kugelfördertischsystem dergestalt weiterzubilden, so dass ein Artikel schnell und mit hoher Genauigkeit in X-und/oder Y-Richtung auf dem Kugeltisch bewegt und/oder positioniert werden kann.

Diese Aufgabe wird durch ein Kugelfördertischsystem gemäß den Patentansprüchen 1, 17 und 18 gelöst. Vorteilhafte Ausgestaltungen und Weiterbildungen der Erfindung sind in den Unteransprüchen beschrieben. Wesentliches Merkmal der Erfindung ist, dass die Ausnehmungen in der Kugelplatte zumindest teilweise eckig ausgebildet sind, wodurch die Kugeln punktartig an mindestens einer Seitenkante der Ausnehmung führbar sind.

Bevorzugt befinden sich mehrere Zahnräder auf der Zahnradplatte, welche formschlüssig ineinandergreifen, wobei die Zahnräder von mindestens einem Antriebszahnrad angetrieben werden. Dadurch ergibt sich der Vorteil, dass lediglich ein Antriebszahnrad eine Vielzahl von Zahnrädern antreibt und somit einer Bewegung von einer Vielzahl von Kugel bewirkt. Diese Ausführungsform kann insbesondere als Förderband zum linearen Fördern von Artikel in eine bestimmte Richtung eingesetzt werden. Eine derartige vereinfachte Ausführung kann als Verbindungsmodul in einem Gesamtanlagensystem oder in einem Einlauf- oder Auslauf-Modul eingesetzt werden.

Erfindungsgemäß sind die Zahnräder auf der Zahnradplatte liegend angeordnet. Dies bedeutet, dass die Kreisringstirnseiten in Richtung der Kugelplatte bzw. in Richtung der Zahnradplatte zeigen. Durch die flächige Anordnung der Zahnräder auf der Zahnradplatte wird insbesondere ein flacher Aufbau des Kugelfördertischsystems erreicht. Des Weiteren wird durch den Einsatz von Zahnrädern eine formschlüssige Verbindung zwischen dem Antriebszahnrad und dem Zahnrad erreicht, was insbesondere eine verzögerungsfreie und schlupffreie Übertragung der Bewegung bewirkt.

Generell wird unter einem Zahnrad ein Rad mit über den Umfang gleichmäßig verteilten Zähnen verstanden. Die Zähne können hierbei auch nur teilweise über den Umfang des Rades angeordnet sein. Wichtig ist, dass die Zähne des Zahnrades mit den Zähnen des Antriebsrades formschlüssig in Verbindung sind.

Das Antriebszahnrad kann jedoch auch beispielsweise als Stirnrad, Zahnstange, Ellipsenrad, Kegelrad, Kronenrad oder ein Schneckenrad und Schnecke ausgebildet sein. So kann beispielsweise bei einer Ausführungsform statt eines Antriebsrades eine Zahnstange eingesetzt werden, welche durch eine Linearbewegung eine Drehbewegung des Zahnrades bewirkt.

Bei einer weiteren bevorzugten Ausführungsform weist der Kugelfördertisch eine Kugelplatte mit Ausnehmungen auf, durch welche die mindestens eine Kugel zumindest teilweise hindurchgreift, wobei sich unterhalb der Kugelplatte eine Zahnradplatte mit mindestens eine Zahnrad befindet, welches mit der Kugel in reibschlüssigen Kontakt ist. Unterhalb der Zahnradplatte befindet sich eine Basisplatte, wobei sich zwischen der Zahnradplatte und der Basisplatte mindestens eine Verschiebemittel befindet, welches eine Bewegung in X- und/oder Y-Richtung der Zahnradplatte gegenüber der Basisplatte bewirkt.

Bei einer bevorzugten Ausführungsform ist das Verschiebemittel als ein Exzenter ausgebildet, welcher drehbar auf der Basisplatte angeordnet ist und mit der Zahnradplatte verbunden ist. Der Exzenter wird von einem eigenen Antriebsmotor angetrieben. Durch die exzentrische Bewegung des Exzenters findet eine Bewegung der gesamten Zahnradplatte in x-y-Richtung statt. Die Zahnradplatte führt somit eine Taumelbewegung bzw. eine Auslenkbewegung durch, wobei alle Zahnräder auf der Zahnradplatte gleichzeitig bewegt werden. Dadurch, dass die Zahnräder in reibschlüssigen Kontakt mit den Kugeln stehen, können nun die Kugel aufgrund der Drehbewegung des Antriebszahnrades und/oder der Drehbewegung des Exzenters bewegt werden. Damit ist es erstmals möglich einen Artikel mit Hilfe der Kugeln in X-Y-Richtung auf der Kugelplatte zu bewegen.

Die Bewegung mit dem Verschiebemittel und den Zahnrädern kann beispielsweise eine Verschiebung, Rotation, Drehung oder Positionierung des Artikels bewirken.

Es ist darüber hinaus möglich, dass durch die Verstellbewegung des Exzenters auf der Basisplatte und die Bewegungsrichtung des Artikels durch über die Kugeln bestimmt wird, ohne dass die Drehrichtung des Antriebszahnrades geändert werden muss.

Bei weiteren bevorzugten Ausführungsformen ist das Verschiebemittel, welches zwischen der Basisplatte und der Zahnradplatte angeordnet ist, als Linearmotor, Schrittmotor, Servomotor, Gleichstrommotor oder dergleichen ausgebildet. Ferner kann als Verschiebemittel auch ein Hydraulikzylinder oder ein pneumatisch angetriebener Zylinder eingesetzt werden. Entscheidend ist, dass das Verschiebemittel eine Verschiebebewegung der Zahnradplatte gegenüber der Basisplatte durchführt.

Das Kugelfördertischsystem kann beispielhaft eine Abmessung von 750 x 750 mm aufweisen. Auf der Zahnradplatte sind (12 x 12) 144 Zahnrädern drehbar angeordnet, welche bevorzugt als Kugel-Triebzahnräder ausgebildet sind. Die Zahnräder weisen an den Zahnradoberseiten elastomere Kreisring-Stirnseiten auf, wodurch eine reibschlüssige Verbindung zwischen dem Zahnrad und der Kugel erreicht wird. Bei dem vorliegenden Ausführungsbeispiel sind genauso viele Zahnräder, wie Kugeln vorhanden. Die Zahnräder werden von 36 Antriebszahnrädern angetrieben, welche jeweils eine Gruppe von vier Zahnrädern gleichzeitig antreiben. Dies bedeutet, dass ein Antriebsrad jeweils vier Zahnräder antreibt. Entscheidend ist, dass die 36 Antriebszahnräder nur durch einen einzigen Antrieb angetrieben werden. Bevorzugt erfolgt der Antrieb nur in einer Drehrichtung. Dies bewirkt, dass sich alle 144 Zahnräder und somit alle 144 Kugeln drehen. Die in dieser Ausführungsform genannten 36 Antriebszahnräder greifen in jeweils 4 Kugel-Triebzahnräder ein, also in gesamt 144 Zahnräder. Der gesamte Antrieb erfolgt bei dieser Ausführungsform nur durch den Antrieb von einem einzelnen Antriebszahnrad, da damit automatisch alle anderen 35 Antriebszahnräder und ferner alle 144 Kugel-Triebzahnräder bewegt werden.

Als Antriebsmotor für die Zahnräder wird bevorzugt ein Schrittmotor, wie z.B. ein 2 x 3 Phasen Schrittmotor gewählt. Der Schrittmotor weist ein Untersetzungsverhältnis von beispielsweise 1:3 auf. Somit wird z.B. die Drehzahl von 600 Upm des Schrittmotors auf 200 Upm an den Antriebszahnrädern reduziert. Grundsätzlich sind jedoch auch andere elektrisch betriebene Motoren mit guter Regelbarkeit verwendbar.

Bei einer weiteren bevorzugten Ausführungsform ist die Kugelplatte mit der Basisplatte fest verbunden und die dazwischen angeordnete Zahnradplatte mittels des Verschiebemittels (z.B.Exzenter) in X-Y-Richtung verstellbar ausgebildet. Durch diese Exzentersteuerung kann die Förderrichtung der Kugeln und damit die Bewegung des darauf angeordneten Artikels beliebig gewählt werden, ohne die Drehrichtung des Antriebsmotors zu verändern, wobei die Fördergeschwindigkeit in einem Bereich von 0 bis 18 m/min frei wählbar ist.

Die Kugeln werden in der Kugelplatte abdeckend geführt, wobei die Ausnehmungen in der Kugelplatte beispielsweise mehreckig ausgebildet sind, so dass die Kugeln immer nur an zwei Seitenflanken geführt werden. Dadurch wird eine ruhige Führung der Kugeln ohne pendeln bzw. oszillieren bzw. taumeln erreicht.

Zumindest die Randflächen der Aussparungen der Kugelplatte müssen gegenüber der Kugeloberfläche so ausgebildet sein, dass eine möglichst geringe Reibung vorliegt. Dies kann durch geeignete Materialwahl bzw. Wahl der Beschichtung und durch eine entsprechende Oberflächenbeschaffenheit erreicht werden. Zusätzlich muss darauf geachtet werden, dass elektrostatische Ladungen abgeleitet werden. In kritischen Fällen können elektrostatisch ableitende Bürstensysteme im Bereich der Ausnehmungen integriert werden. Dadurch wird sichergestellt wird, dass keine elektrostatischen Aufladungen entstehen.

Die Wahl des Materials und der Oberflächenbeschaffenheit bzw. die Beschichtung der Kugeln muss an die zu bewegenden Artikel und deren Transportflächenbeschaffenheit bzw. des Gewichts und der in Kontakt befindlichen Fläche ausgelegt sein und auf die gewünschte Förder- und Positionier-Dynamik.

Die Zahnräder sind bevorzugt mit elastomeren Kreisring-Auflagen auf den Oberseiten der Zahnräder versehen. Der mittige Durchmesser dieser Kreisrings-Auffagen ist jener Kreisring, auf dem die Kugeln sich durch die Exzenterverstellung bewegen können. Das Verstellmass des Exzenters ergibt sich aus dem mittigen Durchmesser dieses Kreisrings. Die Auslenkung bzw. die Taumelbewegung der Zahnradplatte gegenüber der Basisplatte wird somit von dem Durchmesser des Exzenters bestimmt.

Sollte statt dem Exzenter ein anderes Verschiebemittel für die Verstellbewegung der Zahnradplatte gegenüber der Basisplatte eingesetzt werden, so bestimmt sich die Auslenkung bzw. Taumelbewegung durch das bewegte Glied des Verschiebemittels. Beispielshaft wird an dieser Stelle als Verstellbewegung eine Auslenkung in X- und/oder Y-Richtung von circa 5mm angegeben.

Die Zahnräder und/oder Antriebsräder bestehen beispielsweise aus Kunststoff, wie z.B. einem hochmolekularen thermoplastischen Kunststoff. Es ist jedoch auch möglich, dass Zahnräder aus Stahl, Aluminium oder einem anderen Material eingesetzt werden.

Die Kugeln sind zumindest teilweise in der Ausnehmung der Kugelplatte angeordnet. Ein Problem bei plattenförmigen Artikeln wie z.B. Leiterplatten stellt deren Verbiegung bzw. Verwölbung dar. Mit Testmethoden wird der maximal erlaubte Wert in Prozent gemessen, wobei bei starren Leiterplatten üblicherweise 1,5% als maximal erlaubtes Maß vorgegeben ist bzw. bei Leiterplatten für eine SMD Bestückung sind oftmals nur 0,75% erlaubt. Es werden daher die Kugeln zur Oberseite der Kugelplatte mit etwa 6 bis 8 mm Erhöhung ausgeführt. Dieses Maß kann je nach zu transportierenden bzw. positionierendem Artikel relativ frei gewählt werden.

Die Kugeln können aus einem elastomeren, metallischen, keramischen, thermoplastischen oder duroplastischem Material bestehen. Die Oberfläche der Kugel können unterschiedliche Oberflächenbeschaffenheiten aufweisen. Diese können beispielsweise hochglänzend glatt, aufgeraut, strukturiert, beschichtet, antistatisch oder elektrisch ableitend ausgebildet sein. In speziellen Anwendungen werden Kugeln aus Fluorpolymermaterial (PTFE) wie z.B. Teflon verwendet.

Die Kugeln liegen auf elastomeren Kreisringen der flach liegenden Zahnräder auf. In einer kosteneffizienten und erprobten Ausführungsform werden Platten aus Naturgummi bzw. einer Natur-/Synthetik-Gummimischung mit sehr hoher Dauerelastizität und hoher Abriebbeständigkeit und hoher Formbeständigkeit verwendet. Hierzu werden aus den Platten mit 1 bis 5 mm Dicke mittels Laserstrahl oder Wasserstrahl die Kreisringe geschnitten und auf den Stirnseiten der Zahnräder angeordnet. Derartige elastomere Kreisringe sind kosteneffizient herstellbar und sehr langlebig und halten auch hohe punktuelle Flächenlasten durch die Kugeln sehr gut und langzeitstabil aus. Ferner erfüllen sie die Forderungen an eine hohe Friktion zur Erreichung der gewünschten Förder- und Positionier-Dynamik.

Die Kugelplatte besteht bevorzugt aus Edelstahl oder Aluminium. Es sollte jedoch darauf geachtet werden, dass der Reibungskoeffizient zu den Kugeln passt und die elektrostatische Ableitung berücksichtigt wird. Vorteilhafterweise lassen sich die Kugelplatten rasch entfernen und sind leicht zu reinigen.

Mit der vorliegenden Patentanmeldung wird ferner ein Verfahren zum Fördern und Positionieren von Artikeln mit dem erfindungsgemäßen Kugelfördertischsystem und eine Anwendung des Kugelfördertischsystems zur Förderung und Positionierung von Artikeln, insbesondere von Leiterplatten und derartigen flächigen Artikeln beansprucht.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung offenbarten Angaben und Merkmale, insbesondere die in den Zeichnungen dargestellte räumliche Ausbildung, werden als erfindungswesentlich beansprucht, soweit sie einzeln oder in Kombination gegenüber dem Stand der Technik neu sind. Im Folgenden wird die Erfindung anhand von mehreren Ausführungswegen darstellenden Zeichnungen näher erläutert.
- Figur 1:: schematische Darstellung des Kugelfördertischsystems
- Figur 2a bis d:: schematische Darstellung des Kugelantriebsystems auf Basis einer Vielzahl an Zahnrädern
- Figur 3:: schematische Darstellung der Bewegungsrichtungen der Kugeln
- Figur 4:: schematische Darstellung der Kugelplatte, der Zahnradplatte und der Basisplatte mit dem Antriebsmotor der Zahnräder und dem Exzenter-Motor
- Figur 5:: schematischen Ausschnitt mit vier Kugeln und den drei Platten und den beiden Motoren
- Figur 6:: schematischen Ausschnitt mit vier Kugeln und nur zwei Platten als Ausführung nur zur Linearbewegung bzw. Förderung
- Figur 7 a bis d:: schematische Darstellung der Bewegungsrichtung der Kugeln je nach Position der Kugel am Kreisring
- Figur 8a:: schematische Darstellung der Bewegung der Kugel auf dem Kreisring;
- Figur 8b:: schematische Darstellung der Bewegung der Kugel mit einer Zahnung auf einem Zahnrad mit Zahnung;
- Figur 9:: den Ausschnitt einer Kugelplatte mit einer mehreckigen Aussparung und einer Kugel
- Figur 10: schematische Seitenansicht des Kugelfördertischsystems mit einem Artikel
- Figur 11: schematische Draufsicht auf das Kugelfördertischsystem mit einem Artikel und der Bewegungsrichtung.

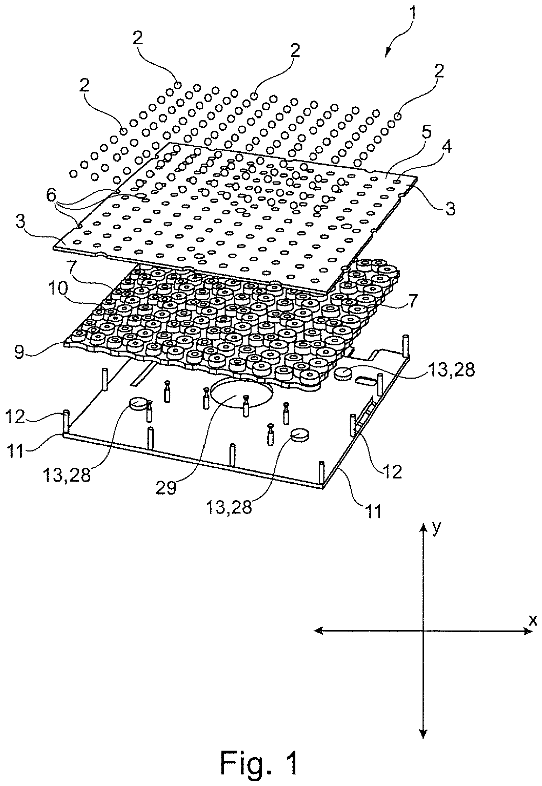

Mit der Figur 1 wird eine schematische Darstellung des erfindungsgemäßen Kugelfördertischsystems 1 gezeigt, welches zur Förderung und Positionierung von Artikeln eingesetzt wird.

Das Kugelfördertischsystem 1weist beispielshaft (12 x 12) 144 Zahnrädern 7 auf und hat eine Abmessung von etwa 750 x 750 mm. Eine derartige Ausführungsform wird für das Fördern und Positionieren von Artikeln 25, wie z.B. Leiterplatten, Halbleitersubstrat, Keramiksubstrat, Glasscheibe, PV-Modul oder dergleichen verwendet.

Das Kugelfördertischsystem 1 kann je nach Anwendung in der Größe und der Anzahl und Dimension der Zahnräder7 variiert werden. Leiterplatten sind naturgemäß größer als Halbleitersubstrate oder Keramiksubstrate, aber i.a. kleiner als Glassubstrate oder Photovoltaikelemente. Bei Logistik-Anwendungen können auch unterschiedliche Abmessungen der zu bewegenden Artikel zu berücksichtigen sein. Das Kugelfördertischsystem1 sollte jedoch auf das Artikelgewicht abgestimmt sein.

Ein wesentliches Kriterium stellt die Planlage des Artikels 25 dar. Dies bedeutet die Auflagefläche, also die Unterseite bzw. Auflagenseite des Artikels 25, auf den Kugel 2. Bei Leiterplatten sind oftmals 1% bis 1,5% Verbiegung bzw. Verwölbung vorhanden. In so einem Fall ist der Überstand der Kugeln 2 durch die Kugelplatte 3 entsprechend groß zu wählen, beispielsweise etwa 6 mm.

Gemäß der Figur 1 besteht das Kugelfördertischsystem 1 im Wesentlichen aus drei übereinander angeordneten Platten 3, 9 und 11. Die Kugelplatte 3 dient zur Aufnahme der Kugeln 2. Die Zahnradplatte 9 dient zur Aufnahme der Zahnräder 7 und der Antriebszahnräder 10. Und die Basisplatte 11 dient zur Aufnahme des Mittels 28, welches bei der vorliegenden Ausführungsform als ein Exzenter 13 ausgebildet ist.

Die Basisplatte 11 weist beabstandet Befestigungsstifte 12 auf, welche sich in Richtung der darüber angeordneten Platten 9 und 3 erstrecken. Durch die Befestigungsstifte 12 und Lagerungselementen 6 ist die Basisplatte 11 mit der Kugelplatte 3 lösbar verbunden. Anstatt der Verwendung von Befestigungsstiften 12 können auch Leisten oder allgemeine Verschraubungssysteme bzw. Verstiftungssysteme zur Verbindung eingesetzt werden.

Zwischen der Basisplatte 11 und der Kugelplatte 3 befindet sich die Zahnradplatte 9. Die Zahnradplatte 9 ist über die bewegbar ausgebildeten Verschiebemittel 28 mit der Basisplatte 11 verbunden. Gemäß der Figur 1 ist das Verschiebemittel 28 als drehbarer Exzenter 13 ausgebildet. Der Exzenter 13 weist einen Exzenterbolzen 19 auf, welche in eine Bohrung 20 in der Zahnradplatte 9 eingreift. Durch die Bewegung des Exzenters 13 bewegt sich somit auch die Zahnradplatte 9. Aufgrund der Ausbildung des Verschiebemittels 28 als Exzenters 13 findet nun eine Bewegung der Zahnradplatte 9 gegenüber der Basisplatte 11 in X- und Y-Richtung statt.

Auf der Zahnradplatte 9 ist eine Vielzahl von liegenden und drehbar gelagerten Zahnrädern 7 angeordnet. Es bilden stets vier Zahnräder 7 eine Gruppe, wobei die vier Zahnräder 7 in formschlüssigen Eingriff mit jeweils einem Antriebszahnrad 10 stehen. Dies bedeutet, dass jeweils ein Antriebszahnrad 10 insgesamt vier Zahnräder 7 antreibt bzw. bewegt.

In einer weiteren Ausführungsform kann anstelle des formschlüssigen Eingriffs der Zahnräder 7, 10 ein verschränkter Riementrieb verwendet werden, wobei die Zahnräder als Riemenräder eingesetzt werden.

Über der Zahnradplatte 9 befindet sich die Kugelplatte 3. In der Kugelplatte 3 sind zahlreiche Ausnehmungen 4 für die Kugeln 2 vorhanden, wobei die Kugeln 2 zumindest teilweise durch die Kugelplatte 3 durchgreifen und dadurch mit den darunterliegenden Zahnrädern 7 in Kontakt sind. Der direkte Kontakt zwischen dem Zahnrad 7 und der Kugel 2 findet auf der Stirnseite des Zahnrades 7 statt, wobei das Zahnrad 7 in diesem Bereich vorteilhafterweise ein elastomerer Kreisring 8 aufweist. Der elastomere Kreisring 8 besitzt einen Reibkoeffizienten, welcher eine Drehbewegung der darüber liegenden Kugel bewirkt.

Da die Zahnradplatte 9 mittels Exzenter 13 verstellt werden kann, ist der Verstellbereich mit dem mittleren Durchmesser des stirnseitigen Kreisrings 8 auf dem Zahnrad 7 abgestimmt.

Anhand der Figur 1 ist ferner zu erkennen, dass die Basisplatte 11 einen Ausnehmung 29 aufweist, durch welche der zumindest eine Antriebsmotor 17 für die Zahnräder 7 durchgreift bzw. innerhalb dieser Ausnehmung 29 angeordnet ist. Die Größe der Ausnehmung 29 muss in etwa der Auslenkung der Zahnradplatte 7 gegenüber der Basisplatte 11 entsprechen. Selbstverständlich kann die Basisplatte 11 auch mehrere Ausnehmungen 29 aufweisen, durch welche mehrere Antriebsmotoren 17 durchgreifen und mehrere Zahnräder 7 antreiben.

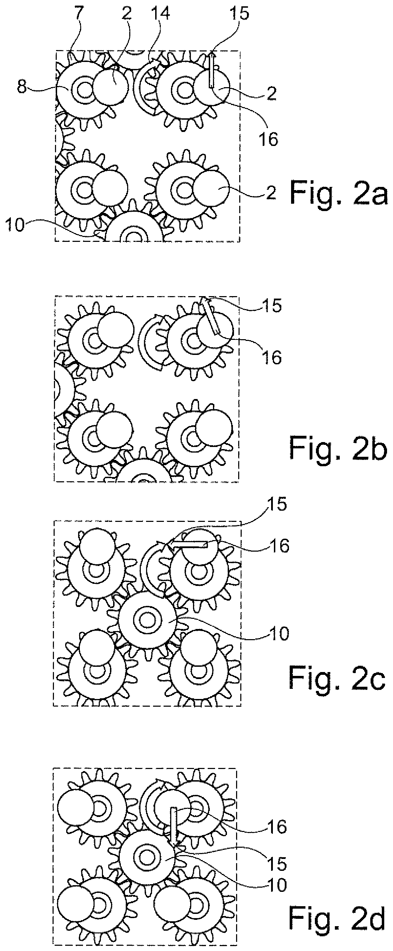

In Figur 2 a bis d wird eine schematische Darstellung des Kugelantriebsystems auf Basis einer Vielzahl an Zahnrädern 7 gezeigt. Es sind vier Zahnräder 7 vorhanden, wobei auf den stirnseitigen Kreisringen 8 der Zahnräder 7 insgesamt vier Kugeln 2 aufliegen, weiche durch eine Bewegung der Zahnräder 7 bewegt werden.

Gemäß der Figur 2afindet eine Drehbewegung der Zahnräder 7 in Drehrichtung 14 (=im Uhrzeigersinn) statt. Die Zahnräder 7 werden durch die Antriebszahnräder 10 angetrieben. Dadurch ist die Drehrichtung 14 bei allen vier Zahnrädern 7 gleich. In der Figur 2a befindet sich die Kugel 2 auf dem Kreisring 8 auf 3 Uhr gemäß der Uhrzeigerposition 16 und wird in die Bewegungsrichtung 15 nach oben (entgegen des Uhrzeigersinns) bewegt.

In der Figur 2b befindet sich die Kugel 2 auf dem Kreisring 8 auf 2 Uhr gemäß der Uhrzeigerposition 16 und wird weiter entgegen des Uhrzeigersinns in Richtung 15 bewegt.

In Figur 2c befindet sich die Kugel 2 auf dem Kreisring 8 auf 12 Uhr gemäß der Uhrzeigerposition 16 und wird damit in Richtung 15 entgegen des Uhrzeigersinns bewegt.

In Figur 2d befindet sich die Kugel 2 auf dem Kreisring 8 auf 9 Uhr gemäß der Uhrzeigerposition 16 und wird entgegen des Uhrzeigersinns in Richtung 15 (nach unten).

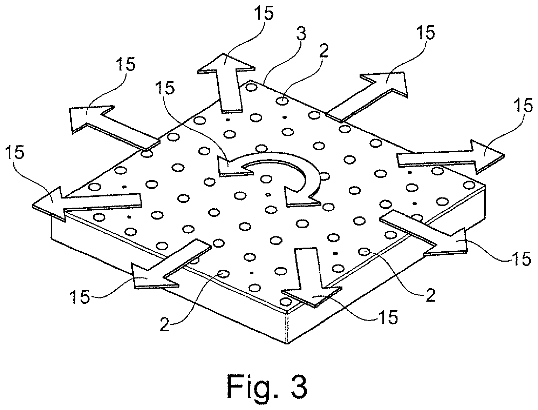

In Figur 3 wird eine schematische Darstellung der möglichen Bewegungsrichtungen der Kugeln 15 dargestellt. Entscheidend ist, dass aufgrund der Drehbewegung des Zahnrades 7 zwar eine Bewegung der Kugel 2 in X- und/oder Y-Richtung möglich ist, jedoch erst durch die zusätzliche Bewegung der Zahnradplatte 9 eine genaue Bewegung bzw. Positionieren stattfindet. Dadurch können nahezu beliebige Bewegungsrichtungen 15 erzeugt werden. Dies sind lineare Bewegungen oder rechnergesteuerte Bewegungsabläufe. Vorteilhafterweise wird mit der erfindungsgemäßen Ausführungsform ein harmonischer Bewegungsverlauf erreicht und somit ruckartige Bewegungen vermieden.

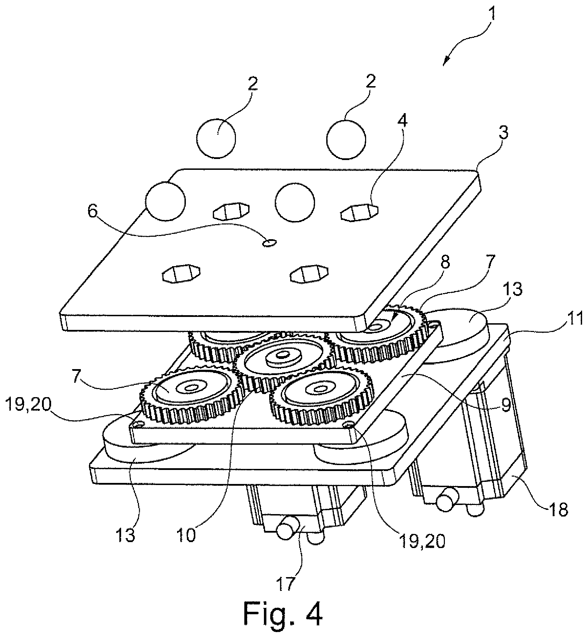

In Figur 4 wird schematische eine explosionsartige Darstellung der erfindungsgemäßen Ausführungsform gezeigt. Hierbei sind die Basisplatte 11, die Zahnradplatte 9, sowie die Kugelplatte 3 übereinander angeordnet. Unterhalb der Basisplatte 11 sind bevorzugt der zumindest eine Antriebsmotor 17 für die Zahnräder 7 und der zumindest eine Antriebsmotor 18 für den Exzenter 13 angeordnet.

Gemäß der Figur 4 sind vier Exzenter 13 dargestellt, wobei ein Exzenter 13 durch den Antriebsmotor 18 bewegt wird. Als Antriebsmotor 18 wird beispielsweise ein Schrittmotor mit guter Dynamik und guter elektronischer Steuerbarkeit verwendet. Bevorzugt wird jeder Exzenter 13 von einem eigenen Antriebsmotor 18 angetrieben, wobei die Bewegung synchronisiert erfolgt.

Der Antrieb der Zahnräder 7 erfolgt durch ein Antriebszahnrad 10, welches von einem Antriebsmotor 17 angetrieben wird. Es können auch mehrere Antriebsmotoren 17 verwendet werden, wobei diese synchron aufeinander abgestimmt sind. Für den Antriebsmotor 17 wird bevorzugt ein Schrittmotor mit einer Untersetzung eingesetzt. Diesbezüglich hat sich insbesondere ein 2 x 3 Phasen Schrittmotor mit einem Untersetzungsgetriebe von 1:3 als besonders geeignet herausgestellt. Dabei wird die Drehzahl des Schrittmotors von beispielsweise 600 Umdrehungen pro Minute (Upm) auf 200 Upm reduziert. In Verbindung mit einem geeignet gewählten, mittleren Durchmesser des Kreisrings 8 auf dem Zahnrad 7 und dem Durchmesser der Kugeln 2 kann somit eine Fördergeschwindigkeit bzw. Bewegungsgeschwindigkeit von 0 bis etwa 18 m/min erreicht werden.

Als besonders vorteilhaft hat sich herausgestellt, wenn die elektronische Steuerung des zumindest einen Antriebsmotor 17 alle Zahnräder 7 in nur einer Richtung bewegt, auch wenn die Bewegungsrichtung 15 der Kugeln geändert werden soll. Die Änderung der Bewegungsrichtung 15 erfolgt dann durch den Antriebsmotor 18 und den damit gekoppelten Exzenter 13, wobei grundsätzlich auch mehrere Antriebsmotore 18 verwendet werden können, welche synchron zueinander gesteuert sind. Die Bewegungsgeschwindigkeit der Kugeln 2 wird durch die Drehzahl des Antriebsmotors 17 bestimmt.

Die elektronische Steuerung der Bewegungsrichtung 15 und der Bewegungsgeschwindigkeit der Kugeln 2 wird durch die rechnergestützte Ansteuerung der beiden Antriebe 17, 18 realisiert.

Die Lagerungen der Zahnräder 7 und der Antriebszahnräder 10 kann mittels Gleitlagerung oder mit Kugel- oder Wälzlagerung erfolgen. Der Exzenterbolzen 19 kann ebenfalls in der Exzenterbohrung 2 in der Zahnradplatte 9 mittels Gleitlager oder Kugel- bzw. Wälzlager drehbar gelagert sein.

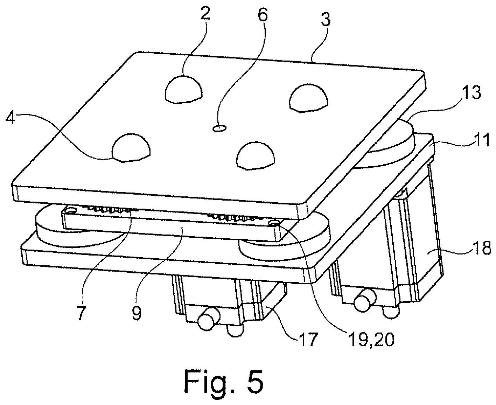

In Figur 5 wird schematisch die erfindungsgemäße Ausführungsform mit vier Kugeln 2 und den drei Platten 3, 9, 11 gezeigt. Die Antriebsmotoren 17, 18 sind beide unterhalb der Basisplatte 11 angeordnet.

Bei einer weiteren bevorzugten Ausführungsform ist es möglich, dass die Antriebsmotoren 17, 18 beabstandet von der Basisplatte 11 angeordnet sind. Die Kraftübertragung für die Drehbewegung des Antriebszahnrades 10 und/oder des Exzenters 13 erfolgt dann beispielsweise über einen Riemenantrieb, eine Zahnrad- oder Zahnstangenverbindung, eine Gelenkverbindung oder dergleichen.

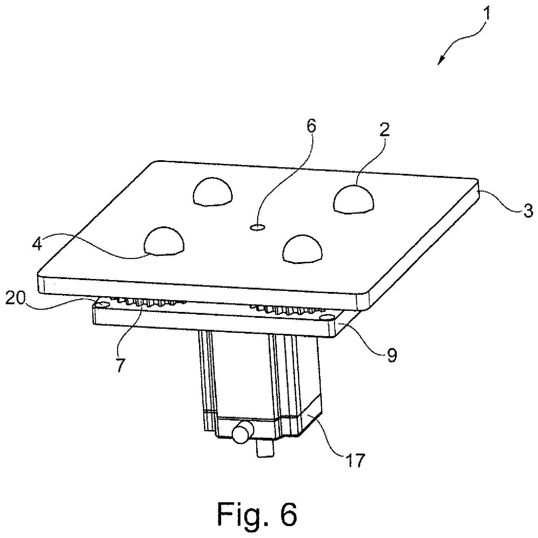

Mit der Figur 6 wird eine weitere Ausführungsform des erfindungsgemäßen Kugelfördertischsystems 1 gezeigt. Das Kugelfördertischsystem 1 besteht aus einer Zahnradplatte 9 und einer Kugelplatte 3, welche Ausnehmungen 4 für die drehbaren Kugeln 2 aufweist. Diese vereinfachte Ausführungsform ermöglicht eine flachere und kostengünstigere Bauart und wird als Ein- bzw. Auslauf bzw. als Verbindungssystem verwendet. In dieser Ausführungsform ist nur ein Linear-Förderbetrieb möglich. Auf den Antriebsmotor 18, die Exzenter 13, sowie die Basisplatte 11 wird verzichtet.

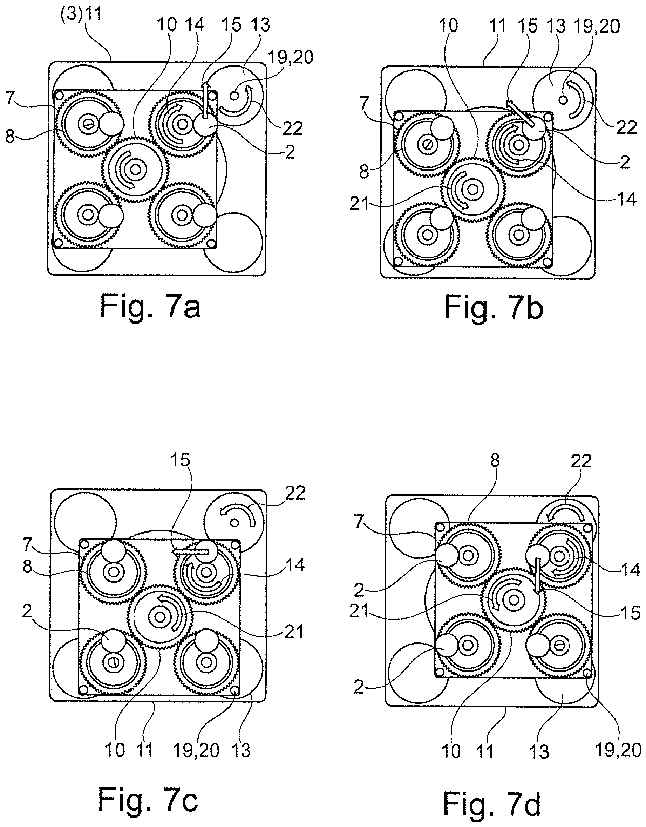

In Figur 7 a bis d wird eine schematische Darstellung der Bewegungsrichtung der Kugeln 2 je nach Position der Kugel 2 am Kreisring 8 analog zu den Figuren 2 a-d gezeigt. Aus Gründen der Vereinfachung werden in diesen vier Figuren 7 a-d nur vier Zahnräder 7 und je ein Antriebszahnrad 10 dargestellt. Die Kugelplatte 3 ist nicht eingezeichnet, wobei die Außenkontur mit der Basisplatte 11 übereinstimmt.

Das Maß für die Verschiebung 31 der Zahnradplatte 9 mit dem Verschiebemittel 28 ergibt sich aus dem mittigen Durchmesser des Kreisrings 8 des Zahnrads 7.

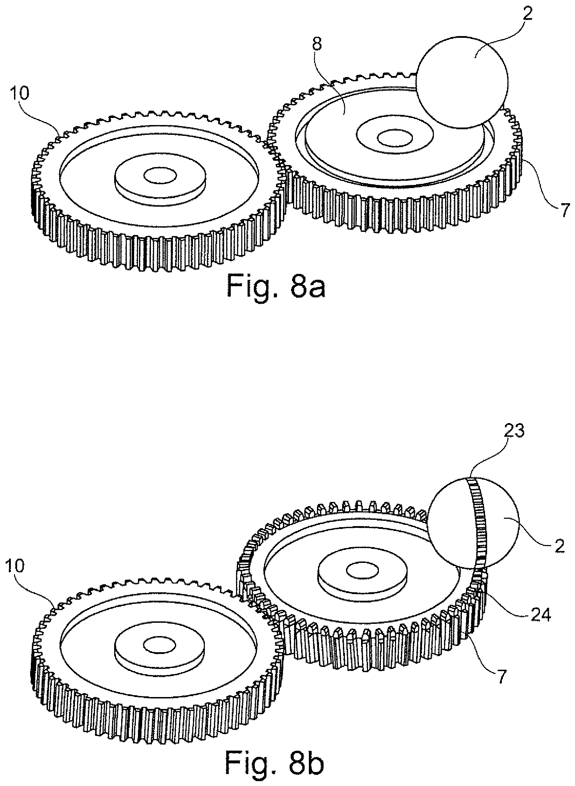

In Figur 8 a zeigt eine schematische Darstellung der Bewegung der Kugel 2 auf dem Kreisring 8 des Zahnrades 7. Bei dieser Ausführungsform erfolgt der Antrieb der Kugeln 2 durch Friktion mit der Oberfläche des Kreisrings 8. Die Kreisring Oberfläche des Kreisrings 8 auf dem Zahnrad 7 wird bevorzugt aus einem elastomeren Material gebildet. Beispielhaft wird für ein elastomeres Element für den Kreisring 8 ist Naturgummi oder eine Natur-/Synthetik-Gummimischung mit sehr hoher Dauerelastizität, hoher Abriebbeständigkeit und hoher Formbeständigkeit. Es sind auch Kautschukplatten mit 1 bis 5 mm Dicke möglich, wobei aus diesen Platten mittels Laserstrahl oder Wasserstrahl die Kreisringe ausgeschnitten und auf den Stirnseiten der Antriebszahnräder angeordnet werden. Derartige elastomere Kreisringe sind kosteneffizient herstellbar und sehr langlebig und halten auch hohe punktuelle Flächenlasten durch die Kugeln sehr gut und langzeitstabil aus und erfüllen die Forderungen an eine hohe Friktion zur Erreichung der gewünschten Förder- und Positionier-Dynamik.

Die Kugeln 2 können aus einem elastomeren Material oder einem metallischen oder keramische oder thermoplastischen oder duroplastischem Material bestehen und können eine unterschiedliche Oberflächenbeschaffenheit von hochglänzend glatt bis aufgeraut bis strukturiert oder auch mit einer Beschichtung bzw. antistatisch ausgerüstet bzw. elektrisch ableitend aufweisen. Bevorzugt werden standardisierte Kugeln mit dem entsprechenden Kostenvorteil verwendet. In speziellen Anwendungen werden Kugeln aus Fluorpolymermaterial (PTFE) wie z.B. Teflon eingesetzt.

Die Zahnräder 7 stellen in dieser Ausführungsform einen relativ großen Kostenfaktor dar. Die 36 Antriebszahnräder 10 greifen in jeweils vier Zahnräder 7 ein und ergeben somit gesamt 144 Zahnräder 7. Der Antrieb erfolgt in dieser Ausführungsform nur durch den Antrieb von einem einzelnen Antriebszahnrad 10, da damit automatisch alle anderen 35 Antriebszahnräder 10 und derart alle 144 Kugel-Triebzahnräder 7 bewegt werden.

Durch die Wahl von standardisierten Kunststoffzahnrädern 7, 10 beispielsweise aus einem hochmolekularen thermoplastischen Kunststoff wie Polyoxymethylen (Kurzzeichen POM bzw. Polyacetal bzw. Polyformaldehyd oder Acetal mit den Handelsnamen: Delrin von DuPont, Celcon und Hostaform und Kematal von Ticona/Celanese, Duracon von Polyplatics, Kepital von Korea Engineering Plastics, usw.) kann der Stückpreis sehr gering gehalten werden.

Figur 8 b zeigt eine weitere bevorzugte Ausführungsform. Hierbei weist die Kugel 2 eine Zahnung 23 auf, welche in eine Zahnung 24 des Zahnrades 7 eingreift. In dieser Ausbildungsform wird durch die Verwendung von Zahnungen 23, 24 ein Schlupf zwischen Zahnrad 7 und Kugel 2 hintangestellt und es wird keine elastomere Auflage auf den Zahnrädern 7 benötigt,

Die Verschmutzung der Zahnungen 23, 24 ist bei Reinraumanwendungen grundsätzlich gering. Überdies können die Kugeln 2 mit den Zahnungen 23 einfach entnommen werden und einer Reinigung zugeführt werden.

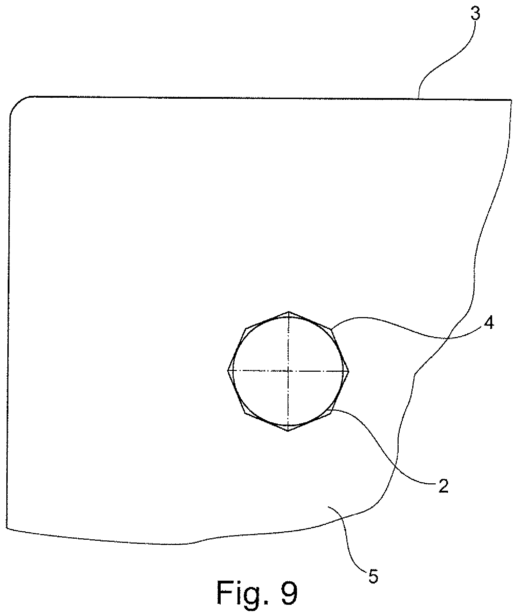

In Figur 9 wird eine mehreckige Ausnehmung 4 in der Kugelplatte 3 dargestellt. Die Kugelplatte 3 wird bevorzugt aus Edelstahl oder Aluminium mit der gewünschten Oberfläche 5 gefertigt. Der Reibungskoeffizient der Kugelplatte 3 ist an den Reibungskoeffizient der Kugeln 2 angepasst. Die elektrostatische Ableitung wird berücksichtigt. Des Weiteren ist die Kugelplatte 3 rasch entfernbar und leicht reinigbar.

Die Vielzahl der Kugeln 2 werden in der Kugelplatte 3 abdeckend geführt, wobei die Ausnehmungen 4 in der Kugelplatte 3 mehreckig ausgebildet sind. Die Kugeln 2 sind dadurch immer nur an 2 Seitenflanken geführt. Dies bewirkt eine ruhige Führung der Kugeln 2 innerhalb der Ausnehmung 4 ohne pendeln bzw. oszillieren bzw. taumeln.

Zumindest die Randflächen der Aussparungen 4 der Kugelplatte 3 müssen gegenüber der Kugeloberfläche derart ausgebildet sein, dass eine möglichst geringe Reibung gegeben ist. Dies kann durch geeignete Materialwahl bzw. Wahl der Beschichtung und durch eine entsprechende Oberflächenbeschaffenheit erreicht werden. Zusätzlich muss darauf geachtet werden, dass elektrostatische Ladungen abgeleitet werden. In kritischen Fällen können elektrostatisch ableitende Bürstensysteme integriert werden und kann derart sichergestellt werden, dass keine elektrostatischen Aufladungen entstehen.

Die Wahl des Materials und der Oberflächenbeschaffenheit bzw. einer allfälligen Beschichtung der Kugeln (2) muss an die zu bewegenden Artikel und deren Transportflächenbeschaffenheit bzw. des Gewichts und der in Kontakt befindlichen Fläche ausgelegt sein und auf die gewünschte Förder- und Positionier-Dynamik.

Ein Problem bei plattenförmigen Artikeln wie z.B. Leiterplatten stellt deren Verbiegung bzw. Verwölbung (warpage bzw. bowandtwist, flatness of a board) dar. Gemäß IPC-A-600 bzw. IPC-TM-650 (AssociationConnecting Electronics Industries) Testmethoden wird der maximal erlaubte Wert in Prozent gemessen und wird bei starren Leiterplatten üblicherweise 1,5% als maximal erlaubtes Maß vorgegeben bzw. bei Leiterplatten für eine SMD Bestückung werden oftmals nur 0,75% erlaubt.

Es werden daher in der Anwendung bei Leiterplatten die Kugeln 2 zur Auflage 30 der Kugelplatte mit etwa 6 bis 8 mm Überstand 27 ausgeführt. Dieses Maß kann je nach zu transportierendem bzw. positionierendem Artikel 25 frei wählbar.

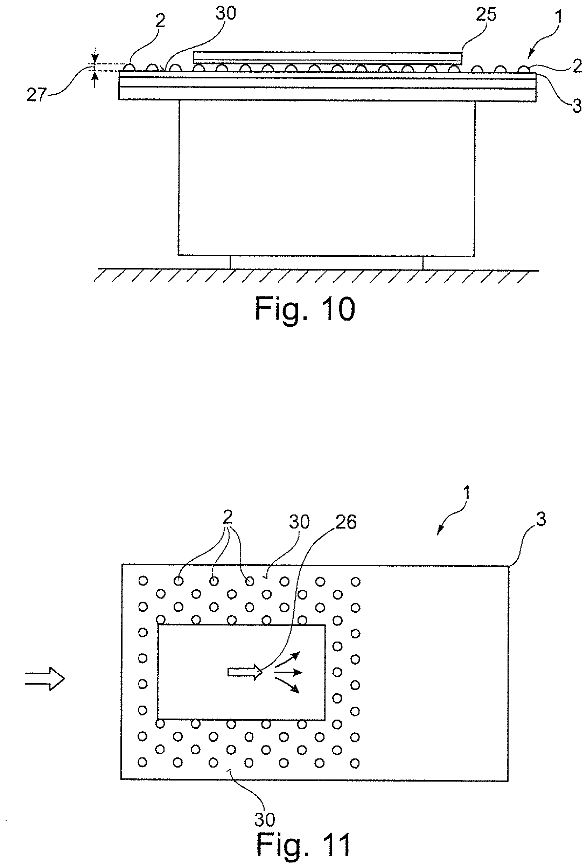

Mit der Figur 10 wird eine schematische Seitenansicht des Kugelfördertischsystems 1 mit einem Artikel 25 dargestellt, welcher auf den Kugeln 2 aufliegt. Bei dieser Ausführung ist der Artikel 25 eine Leiterplatte. Wie bereits genannt, kann ein derartiger Artikel 25 an seiner Unterseite bzw. der Fläche, welche auf den Kugeln 2 aufliegt, eine Verbiegung bzw. Verwölbung aufweisen. Die Unterseite des Artikels 25 ist damit nicht mit allen Kugeln 2 in Kontakt. Dieses Problem wird durch einen Überstandes 7 der Kugeln 2 gegenüber der Oberfläche der Kugelplatte 3 gelöst. Darüber hinaus wird das Material der Kugel 2 entsprechend gewählt, um entsprechende die Kugel 2 gut transportieren bzw. zu positionieren können.

In Figur 11 ist eine schematische Draufsicht auf das Kugelfördertischsystem 1 mit einem aufliegenden Artikel 25 und der Bewegungsrichtung 26 dargestellt. Die Bewegungsrichtung 26 des Artikels 25 kann durch die beiden Antriebsmotoren 17, 18 und einer entsprechenden rechnergesteuerten Elektronik nahezu beliebig gesteuert werden.

Die gewünschte X-Y-Positionierung des Artikels 25 findet durch eine elektronische Steuerung statt, wobei die X-Y-Position auf einer maschinenlesbaren Kodierung angegeben ist, welcher mit Hilfe eines entsprechenden Lesegerätes eingelesen werden kann.

Des Weiteren ist es möglich die gewünschte X-Y-Positionierung mit Hilfe eines Kamerasystems und einer Artikel-Bibliothek und der elektronischen Steuerung anzusteuern.

Mit dem erfindungsgemäßen Kugelfördertischsystem ist es möglich einen Artikel 2 auf den Kugeln 2 in X-und/oder Y-Richtung zu bewegen und zu positionieren. Dies wird durch die Drehbewegung der Zahnräder 7 und die Bewegung der Zahnradplatte 9 erreicht. Bevorzugt wird immer eine Gruppe von vier Zahnrädern 7 durch ein mittig angeordnetes Antriebszahnrad 10 angetrieben.

### Bezugszeichenliste

- 1: Kugelfördertischsystem
- 2: Kugel
- 3: Kugelplatte
- 4: Ausnehmung für 2
- 5: Kugelplattenoberfläche
- 6: Lagerungselement
- 7: Zahnrad
- 8: Stirnseitiger Kreisring auf 7
- 9: Zahnradplatte
- 10: Antriebszahnrad
- 11: Basisplatte
- 12: Befestigungsstift
- 13: Exzenter
- 14: Drehrichtung Zahnrad
- 15: Bewegungsrichtung Kugel
- 16: Position der Kugel am Kreisring
- 17: Antriebsmotor für 7
- 18: Antriebsmotor für 13
- 19: Exzenterbolzen
- 20: Bohrung in 9 für 19
- 21: Drehrichtung von 10
- 22: Drehrichtung von 13
- 23: Zahnung in Kugel
- 24: Zahnung auf Zahnrad
- 25: Artikel
- 26: Bewegungsrichtung von 25
- 27: Überstand
- 28: Verschiebemittel
- 29: Ausnehmung in 11 für 7
- 30: Auflage von 3
- 31: Maß für die Verschiebung von 9 gegenüber 11

## Patentansprüche

1. Kugelfördertischsystem (1) bestehend aus einer Kugelplatte (3) mit einer zumindest abschnittweise ebenen Auflage (30), wobei in der Kugelplatte (3) Ausnehmungen (4) vorhanden sind, durch welche Kugeln (2) zumindest teilweise hindurchgreifen, wobei mindestens ein Antriebsmotor (17) die Kugeln (2) antreibt und dadurch ein auf der Auflage (30) befindlichen Artikel (25) bewegt, wobei das Kugelfördertischsystem (1) eine Zahnradplatte (9) aufweist, welche unter der Kugelplatte (3) angeordnet ist und dass auf der Zahnradplatte (9) drehbar angetriebene Zahnräder (7) angeordnet sind, welche mit den Kugeln (2) reibschlüssig in Kontakt sind und diese antreiben, wobei die Kugeln (2) sich auf einem stirnseitigen Kreisring (8) bewegen und dass die Zahnräder (7) liegend auf der Zahnradplatte (9) angeordnet sind und die Kreisringstirnseiten in Richtung der Kugelplatte bzw. in Richtung der Zahnradplatte zeigen, **dadurch gekennzeichnet, dass** die Ausnehmungen (4) in der Kugelplatte (3) zumindest teilweise eckig ausgebildet sind, wodurch die Kugeln (2) punktartig an mindestens einer Seitenkante der Ausnehmung (4) führbar sind.

2. Kugelfördertischsystem (1) nach Anspruch 1, **dadurch gekennzeichnet, dass** sich unterhalb der Zahnradplatte (9) eine Basisplatte (11) befindet, wobei zwischen der Zahnradplatte (9) und der Basisplatte (11) mindestens eine Verschiebemittel (28) angeordnet ist, welches eine Bewegung in X- und/oder Y-Richtung der Zahnradplatte (9) gegenüber der Basisplatte (11) bewirkt.

3. Kugelfördertischsystem (1) nach Anspruch 2, **dadurch gekennzeichnet, dass** das Verschiebemittel (28) ein Exzenter (13) ist.

4. Kugelfördertischsystem (1) nach Anspruch 2, **dadurch gekennzeichnet, dass** das Verschiebemittel (28) eine Zahnstange ist.

5. Kugelfördertischsystem (1) nach einem der Ansprüche 2 bis 4, **dadurch gekennzeichnet, dass** das Verschiebemittel (28) mit zumindest einem Antriebsmotor (18) bewegbar ist.

6. Kugelfördertischsystem (1) nach den Ansprüchen 2 bis 5, **dadurch gekennzeichnet, dass** ein Antriebsmotor (17) für das Zahnrad (7) und ein Antriebsmotor (18) für das Verschiebemittel (28) von einer Steuerung synchronisiert steuerbar sind.

7. Kugelfördertischsystem (1) nach den Ansprüchen 1 bis 6, **dadurch gekennzeichnet, dass** der Kreisring (8) eine Oberfläche mit einem Reibkoeffizienten aufweist, durch welche die Kugeln (2) bewegbar sind.

8. Kugelfördertischsystem nach den Ansprüchen 1 bis 7, **dadurch gekennzeichnet, dass** die Kugeln (2) einen Reibungskoeffizienten aufweisen, wodurch der auf den Kugeln (2) aufliegende Artikel (25) bewegbar und/oder positionierbar ist.

9. Kugelfördertischsystem nach den Ansprüchen 1 bis 8, **dadurch gekennzeichnet, dass** die Kugelplatte (3) und die Basisplatte (11) fest miteinander verbunden sind und die dazwischenliegende Zahnradplatte (9) in X-und/oder Y-Richtung bewegbar ausgebildet ist

10. Kugelfördertischsystem nach den Ansprüchen 2 bis 9, **dadurch gekennzeichnet, dass** sich das Maß für die Verschiebung (31) der Zahnradplatte (9) mit dem Verschiebemittel (28) aus dem mittigen Durchmesser des Kreisrings (8) des Zahnrads (7) ergibt.

11. Kugelfördertischsystem nach den Ansprüchen 1 bis 10, **dadurch gekennzeichnet, dass** mindestens zwei Zahnräder (7) von einem Antriebszahnrad (10) direkt angetrieben sind oder über einen verschränkten Riemen angetrieben sind.

12. Kugelfördertischsystem nach den Ansprüchen 1 bis 11, **dadurch gekennzeichnet, dass** der zumindest eine Antriebsmotor (17) für das Zahnrad (7) und der zumindest eine Antriebsmotor (18) für das Verschiebemittel (28) als Schrittmotor ausgebildet sind.

13. Kugelfördertischsystem nach den Ansprüchen 1 bis 12, **dadurch gekennzeichnet, dass** der zumindest eine Antriebsmotor (17) ein 2 x 3 Phasen Schrittmotor ist und ein Untersetzungsgetriebe mit einer Untersetzung von 1:3 aufweist.

14. Kugelfördertischsystem nach den Ansprüchen 1 bis 13, **dadurch gekennzeichnet, dass** die Kugeln (2) aus einem elastomeren Material, einem metallischen Material, einem keramischen Material, einem thermoplastischen Material oder einem duroplastischen Material bestehen.

15. Kugelfördertischsystem nach Anspruch 1 bis 14, **dadurch gekennzeichnet, dass** die Kugelplatte aus Edelstahl oder Aluminium besteht, elektrisch ableitend ausgebildet ist und einen geringen Reibungskoeffizienten gegenüber den Kugeln (2) aufweist.

16. Kugelfördertischsystem (1) nach Anspruch 1 bis 15, **dadurch gekennzeichnet, dass** der Artikel (25) eine Leiterplatte, ein Halbleiterscheibenelement, ein Photovoltaikelement, ein Glaselement, ein Keramikelement oder ein Anzeigeelement ist.

17. Verfahren zum Fördern und Positionieren von mindestens einem Artikel (25) mit dem Kugelfördertischsystem (1) nach einem der vorgenannten Ansprüche, **dadurch gekennzeichnet, dass** der Artikel (25) in X-und/oder Y-Richtung bewegbar ist.

18. Anwendung des Kugelfördertischsystems (1) nach einem der vorgenannten Ansprüche zur Förderung und Positionierung von Artikeln, welche Leiterplatten, Halbleitersubstrate, Keramiksubstrate, Glassubstrate oder Photovoltaikelemente sind.

## Claims

1. Ball conveyer table system (1) consisting of a ball plate (3) with a support (30) flat at least in sections, wherein recesses (4) through which balls (2) at least partly engage are present in the ball plate (3), wherein at least one drive motor (17) drives the balls (2) and thus moves an article (25) located on the support (30), wherein the ball conveyer table system (1) has a gear plate (9) which is arranged below the ball plate (3) and in that rotatably driven gears (7), which are in frictional contact with the balls (2) and drive them, are arranged on the gear plate (9), wherein the balls (2) are moved on an end face-side annulus (8) and in that the gears (7) are arranged lying on the gear plate (9) and the annulus end-face sides point in the direction of the ball plate or in the direction of the gear plate, **characterised in that** the recesses (4) in the ball plate (3) are configured to be at least partly angular, whereby the balls (2) can be guided point-wise on at least one side edge of the recess (4).

2. Ball conveyer table system (1) according to claim 1, **characterised in that** a base plate (11) is located below the gear plate (9), wherein at least one displacement means (28), which causes a movement in X direction and/or Y direction of the gear plate (9) with respect to the base plate (11), is arranged between the gear plate (9) and the base plate (11).

3. Ball conveyer table system (1) according to claim 2, **characterised in that** the displacement means (28) is a cam (13).

4. Ball conveyer table system (1) according to claim 2, **characterised in that** the displacement means (28) is a toothed rack.

5. Ball conveyer table system (1) according to one of claims 2 to 4, **characterised in that** the displacement means (28) can be moved with at least one drive motor (18).

6. Ball conveyer table system (1) according to claims 2 to 5, **characterised in that** a drive motor (17) for the gear (7) and a drive motor (18) for the displacement means (28) can be controlled in synchronised manner by a control.

7. Ball conveyer table system (1) according to claims 1 to 6, **characterised in that** the annulus (8) has a surface with a coefficient of friction due to which the balls (2) can be moved.

8. Ball conveyer table system according to claims 1 to 7, **characterised in that** the balls (2) have a coefficient of friction, whereby the article (25) resting on the balls (2) can be moved and/or positioned.

9. Ball conveyer table system according to claims 1 to 8, **characterised in that** the ball plate (3) and the base plate (11) are firmly connected to one another and the gear plate (9) lying in-between is configured to be movable in X direction and/or Y direction.

10. Ball conveyer table system according to claims 2 to 9, **characterised in that** the measure of displacement (31) of the gear plate (9) with the displacement means (28) is produced from the centre diameter of the annulus (8) of the gear (7).

11. Ball conveyer table system according to claims 1 to 10, **characterised in that** at least two gears (7) are driven directly by a drive gear (10) or are driven via an interconnected belt.

12. Ball conveyer table system according to claims 1 to 11, **characterised in that** the at least one drive motor (17) for the gear (7) and the at least one drive motor (18) for the displacement means (28) are configured as a stepping motor.

13. Ball conveyer table system according to claims 1 to 12, **characterised in that** the at least one drive motor (17) is a 2 x 3 phase stepping motor and has a reduction gear with a reduction of 1:3.

14. Ball conveyer table system according to claims 1 to 13, **characterised in that** the balls (2) consist of an elastomeric material, a metallic material, a ceramic material, a thermoplastic material or a thermoset material.

15. Ball conveyer table system according to claim 1 to 14, **characterised in that** the ball plate consists of stainless steel or aluminium, is configured to be electrically conductive and has a low coefficient of friction with respect to the balls (2).

16. Ball conveyer table system (1) according to claim 1 to 15, **characterised in that** the article (25) is a printed circuit board, a semiconductor wafer element, a photovoltaic element, a glass element, a ceramic element or a display element.

17. Method for conveying and positioning at least one article (25) with the ball conveyer table system (1) according to one of the aforementioned claims, **characterised in that** the article (25) can be moved in X direction and/or Y direction.

18. Application of the ball conveyer table system (1) according to one of the aforementioned claims for conveying and positioning articles which are printed circuit boards, semiconductor substrates, ceramic substrates, glass substrates or photovoltaic elements.

## Revendications

1. Système de table de transport à billes (1) constitué d'une plaque à billes (3) comprenant un support (30) plan, au moins par sections, dans lequel il est prévu dans la plaque à billes (3) des évidements (4) à travers lesquels des billes (2) passent au moins partiellement, dans lequel au moins un moteur d'entraînement (17) entraîne les billes (2) et déplace ainsi un article (25) qui se trouve sur le support (30), dans lequel le système de table de transport à billes (1) comporte une plaque à roues dentées (9), laquelle est disposée sous la plaque à billes (3), et que sur la plaque à roues dentées (9) sont disposées des roues dentées (7) entraînées à rotation, lesquelles sont en contact par friction avec les billes (2) et entraînent celles-ci, dans lequel les billes (2) se meuvent sur un anneau circulaire côté frontal (8), et que les roues dentées (7) sont disposées de manière couchée sur la plaque à roues dentées (9) et les côtés frontaux des anneaux circulaires sont dirigés dans la direction de la plaque à billes ou dans la direction de la plaque à roues dentées, **caractérisé en ce que** les évidements (4) dans la plaque à billes (3) ont une forme au moins partiellement angulaire, ce par quoi les billes (2) peuvent être guidées à la manière d'un point au moins sur un bord latéral de l'évidement (4).

2. Système de table de transport à billes (1) selon la revendication 1, **caractérisé en ce qu'**une plaque de base (11) se trouve au-dessous de la plaque à roues dentées (9), dans lequel entre la plaque à roues dentées (9) et la plaque de base (11) est disposé au moins un moyen de déplacement (28), lequel provoque un mouvement dans la direction X et/ou Y de la plaque à roues dentées (9) à l'encontre de la plaque de base (11).

3. Système de table de transport à billes (1) selon la revendication 2, **caractérisé en ce que** le moyen de déplacement (28) est un excentrique (13).

4. Système de table de transport à billes (1) selon la revendication 2, **caractérisé en ce que** le moyen de déplacement (28) est une crémaillère.

5. Système de table de transport à billes (1) selon l'une des revendications 2 à 4, **caractérisé en ce que** le moyen de déplacement (28) est mobile avec au moins un moteur d'entraînement (18).

6. Système de table de transport à billes (1) selon les revendications 2 à 5, **caractérisé en ce qu'**un moteur d'entraînement (17) pour la roue dentée (7) et un moteur d'entraînement (18) pour le moyen de déplacement (28) peuvent être commandés de manière synchronisée par une commande.

7. Système de table de transport à billes (1) selon les revendications 1 à 6, **caractérisé en ce que** l'anneau circulaire (8) présente une surface avec un coefficient de friction par laquelle les billes (2) sont déplaçables.

8. Système de table de transport à billes (1) selon les revendications 1 à 7, **caractérisé en ce que** les billes (2) présentent un coefficient de friction, ce par quoi l'article (25) posé sur les billes (25) est déplaçable et/ou positionnable.

9. Système de table de transport à billes (1) selon les revendications 1 à 8, **caractérisé en ce que** la plaque à billes (3) et la plaque de base (11) sont reliées fixement l'une à l'autre et la plaque à roues dentées (9) située entre les deux est agencée de manière déplaçable dans la direction X et/ou Y.

10. Système de table de transport à billes (1) selon les revendications 2 à 9, **caractérisé en ce que** la mesure pour le déplacement (31) de la plaque à roues dentées (9) avec le moyen de déplacement (28) résulte du diamètre centré de l'anneau circulaire (8) de la roue dentée (7).

11. Système de table de transport à billes (1) selon les revendications 1 à 10, **caractérisé en ce qu'au** moins deux roues dentées (7) sont entraînées directement par une roue dentée d'entraînement (10) ou sont entraînées par une courroie croisée.

12. Système de table de transport à billes (1) selon les revendications 1 à 11, **caractérisé en ce que** le au moins un moteur d'entraînement (17) pour la roue dentée (7) et le au moins un moteur d'entraînement (18) pour le moyen de déplacement (28) sont conformés en des moteurs pas à pas.

13. Système de table de transport à billes (1) selon les revendications 1 à 12, **caractérisé en ce que** le au moins un moteur d'entraînement (17) est un moteur pas à pas à 2 x 3 phases et comporte un démultiplicateur avec une démultiplication de 1:3.

14. Système de table de transport à billes (1) selon les revendications 1 à 13, **caractérisé en ce que** les billes (2) sont constituées d'un matériau élastomère, d'un matériau métallique, d'un matériau céramique, d'un matériau thermoplastique ou d'un matériau thermodurcissable.

15. Système de table de transport à billes (1) selon la revendication 1 à 14, **caractérisé en ce que** la plaque à billes est constituée d'acier inoxydable ou d'aluminium, est réalisée de manière électriquement isolante et présente un faible coefficient de friction par rapport aux billes (2).

16. Système de table de transport à billes (1) selon la revendication 1 à 15, **caractérisé en ce que** l'article (25) est une carte imprimée, un élément de plaquette de semi-conducteur, un élément photovoltaïque, un élément en verre, un élément en céramique ou un élément d'affichage.

17. Procédé pour le transport et le positionnement d'au moins un article (25) avec le système de table de transport à billes (1) selon l'une des revendications précédentes, **caractérisé en ce que** l'article (25) est déplaçable dans la direction X et/ou Y.

18. Application du système de table de transport à billes (1) selon l'une des revendications précédentes pour le transport et le positionnement d'articles (25) qui sont des cartes imprimées, des substrats de plaquette de semi-conducteur, des substrats en céramique, des substrat en verre ou des éléments photovoltaïques.
